# EUROPÄISCHE PATENTSCHRIFT

(11) **EP 1 265 690 B1**
(45) Veröffentlichungstag und Bekanntmachung des Hinweises auf die Patenterteilung: **12.03.2008**
(21) Anmeldenummer: 00912638.4
(22) Anmeldetag: 23.03.2000
(51) Int. Cl.: B01D 53/22, B01D 69/08

(54) **SCHLAUCHEINHEIT**
TUBING UNIT
ENSEMBLE DE TUYAUX

(43) Veröffentlichungstag der Anmeldung: 18.12.2002
(73) Patentinhaber: W.L. Gore & Associates GmbH, 85640 Putzbrunn (DE)
(72) Erfinder: KILLER, Anton, D-83623 Dietramszell (DE); BIER, Christian, D-83623 Dietramszell (DE)
(86) Internationale Anmeldenummer: PCT/EP2000/002588
(87) Internationale Veröffentlichungsnummer: WO 2001/070375

(56) Entgegenhaltungen:
- EP-A- 0 677 321
- DE-A- 19 639 964
- US-A- 5 698 161
- MACKLEY M.R.; NI X.: 'Experimental fluid dispersion measurements in periodic baffled tube arrays' CHEMICAL ENGINEERING SCIENCE Bd. 48, Nr. 18, 08 Januar 1993, UK, Seiten 3293 - 3305
- MACKLEY M.R.; NI X.: 'Mixing and dispersion in a baffled tube for steady laminar and pulsatile flow' CHEMICAL ENGINEERING SCIENCE Bd. 46, Nr. 12, 07 M{rz 1991, UK, Seiten 3139 - 3151

## Beschreibung

Die Erfindung betrifft eine Schlaucheinheit zum Stoffaustausch zwischen mindestens zwei Fluiden.

Es ist bekannt, für flüssig/flüssig, Gas/Gas oder Gas/ flüssig Stoffaustauschsysteme Schlauchmodule mit mehreren Schläuchen wie beispielsweise Membranschläuchen oder Membranhohlfasern einzusetzen. Einer der Vorteile solcher Membranmodule ist die große Menge an Stoffaustauschfläche, welche auf geringem Raum zur Verfügung steht. Somit ist es möglich, Stoffaustauschmodule mit einem geringen Bauvolumen und einem geringen Gewicht herzustellen.
Derartige Module werden beispielsweise zur Ultrafiltration und Mikrofiltration als auch zur Gastrennung eingesetzt.
Unter der Gastrennung wird die Abtrennung einer oder mehrerer gasförmiger Komponenten aus einem Gasstrom verstanden. Ein spezielles Beispiel für eine solche Abtrennung ist die Abgasreinigung, um beispielsweise aus Abgasen eines Kraftwerkes oder aus Erdgas CO₂ abzutrennen.

In den bekannten Schlauchmodulen werden die Schläuche zwischen zwei Stirnplatten eines Gehäuses flüssigkeits- und gasdicht befestigt und ein am Stoffaustausch beteiligtes Fluid, beispielsweise eine Flüssigkeit, durchströmt die Schläuche. Die Schläuche sind in einem Gehäuse angeordnet, das von einem anderen Fluid, beispielsweise einem Gas, durchströmt wird. Die Schläuche können axial oder radial von dem anderen Fluid angeströmt werden.

In den herkömmlichen Schlauchmodulen befinden sich die Schläuche einzeln oder in einem Bündel angeordnet in einem Modulgehäuse. In einer Weiterentwicklung werden anstelle der einzelnen Schläuche Schlaucheinheiten verwendet.

Eine derartige Membranschlaucheinheit ist in der EP -B- 0 677 321 (Witzko, Grünsteudel) beschrieben. Diese Membranschlaucheinheit besteht aus mehreren nebeneinander in einer Ebene angeordneten Schläuchen, die durch Stege miteinander verbunden sind. Die Stege wirken als Abstandshalter zwischen den Schläuchen. Die Membranschläuche bestehen vorzugsweise aus zwei zusammenlaminierten Schichten einer mikroporösen gereckten PTFE (Polytetrafluorethylen)-Membran. Der Innendurchmesser der Schläuche beträgt 0,1 bis 2mm. In einer Ausführungsform weisen die Schläuche eine gasselektive Beschichtung auf

Allen diesen Stoffaustauschsystemen ist gleich, dass eine abzutrennende Stoffkomponente aus einem Fluid in ein zweites Fluid übergeht und dabei von dem zweiten Fluid aufgenommen wird. Bei diesem Vorgang erfolgt ein Massentransport der abzutrennenden Stoffkomponente aus dem ersten Fluid in das zweite Fluid, wobei das zweite Fluid mit dieser Stoffkomponente stark angereichert wird.
Ein bekanntes Verfahren zur Abtrennung vom gasförmigen Stoffen wie CO₂ aus einer Gasphase ist das Gas/Flüssig Trennverfahren. Bei diesem Trennverfahren fließt eine Absorbensflüssigkeit durch die Schläuche eines Schlauchmoduls und das zu trennende Gasgemisch wird an der äußeren Oberfläche der Schläuche entlanggeführt. Dabei diffundiert CO₂ durch die Schläuche und wird von der Absorbensflüssigkeit aufgenommen und aus der Schlaucheinheit transportiert.
Schlaucheinheiten wie die beispielsweise oben beschriebene Membranschlaucheinheit haben den Nachteil, dass die Absorbensflüssigkeit laminar durch die Schläuche fließt. Aufgrund der laminaren Strömung bildet sich unmittelbar an der inneren Oberfläche der Membranschlauchwände eine stationäre Schicht (Grenzschicht) der Absorbensflüssigkeit aus. In diese stationäre Schicht gelangt das CO₂ unmittelbar aus der Gasphase kommend und reichert die Absorbensflüssigkeit an dieser Stelle an. Mit der Aufnahme eines Gases wie CO₂ kommt es zu einer überproportionalen Zunahme der Viskosität der Absorbensflüssigkeit in der stationären Schicht, so dass es an dieser Stelle nicht mehr zum Fließen der Absorbensflüssigkeit kommt. Damit nimmt die stationäre Phase in ihrer Größe immer mehr zu. Die Kapazität zur Aufnahme von CO₂ sinkt an diesen Stellen, da die gesättigte Absorbensflüssigkeit kaum noch weitere CO₂-Moleküle aufnehmen kann und gleichzeitig nicht in der Lage ist, rasch aus den Schläuchen herauszufließen, um neuer Absorbensflüssigkeit Platz zu machen. Damit sinkt der Massentransfer und somit der Stoffübergang an CO₂ in der Membranschlaucheinheit und es kann weniger CO₂ aus einem Gasgemisch absorbiert werden.

Eine mehrdimensionale Anordnung von Hohlfasern zur Übertragung von gasförmigen Stoffen in eine Flüssigkeit beschreibt die US 5,698,161. Die Hohlfasern werden durch eine gasdurchlässige Membrane gebildet und sind rechtwinklig zwei- und dreidimensional miteinander verbunden, wobei die Querschnitte der Hohlfaser in die jeweils angrenzenden Hohlfaserquerschnitte übergehen. Dadurch sind alle Hohlfasern über ihre Querschnitte miteinander verbunden und bilden einen durchgehenden Strömungsverlauf durch die gesamte Anordnung. Nachteilig ist, dass alle Hohlfasern einen gleichen und konstanten Querschnitt aufweisen, somit bildet sich im Inneren der Hohlfasern eine laminare Strömung und damit verbunden eine stationäre Grenzschicht aus, was einen reduzierten Stoffübergang zur Folge hat.

Weil der Massentranfer bzw. der Stoffübergang unter anderem von der Menge an gebundenen CO₂ in der Absorbensflüssigkeit abhängig ist, ergibt sich die Notwendigkeit, eine Mischung der Absorbensflüssigkeit innerhalb der Membranschläuche herbeizuführen. Eine Mischung der Absorbensflüssigkeit kann den CO₂-Gehalt in der Absorbensflüssigkeit gleichmäßig über den gesamten Schlauchquerschnitt verteilen und somit einen schnellen Abtransport der mit CO₂ angereicherten Absorbensflüssigkeit bewirken.

Zur Verbesserung des Massentransfers bzw. Stoffübergang wurden Schläuche mit Querschnittsverengungen entwickelt. Zu diesem Zweck wird der Querschnitt eines Membranschlauches in regelmäßigen Abständen verengt. Das geschieht durch Einschnüren des Schlauchquerschnittes oder durch den Einbau von Hindernissen in den Schlauchquerschnitt, so wie z.B. in M.R. Mackley, "Mixing and dispersion in a baffled tube for steady laminar and pulstatile flow", Chemical Engineering Science 46, 3139 - 3151 (1991) und M.R. Mackley "Experimental fluid dispersion measurements in periodic baffled tube arrays", Chemical Engineering Science 48, 3293 - 3305 (1993) beschrieben. Auf diese Weise wird erreicht, dass die laminare Strömung in den Bereichen der Querschnittsverengungen eine Durchmischung erfährt. Es hat sich herausgestellt, dass Querschnittsveränderungen alleine nicht zu einer zufriedenstellenden Verbesserung des Massentransfers führen.
Auf der einen Seite sind Querschnittsverengungen mit einer Erhöhung des Druckverlustes verbunden, was über die Länge eines Schlauches gesehen sich wiederum nachteilig auf die Gesamteffizienz der Schlaucheinheit auswirkt.
Zum anderen sind bei der Verwendung von Membranschläuchen oder Hohlfasern mit einem geringen Schlauchquerschnitt Querschnittsverengungen kaum mehr realisierbar. Weiterhin wurden die Schlaucheinheiten zur Verbesserung des Massentransfers Vibrationsbewegungen ausgesetzt. Jedoch auch dieses Verfahren zeigte keine nennenswerten Erfolge.

Ausgehend von der oben erläuterten Problematik ergibt sich die Aufgabe der vorliegenden Erfindung, eine Schlaucheinheit zu schaffen, bei der die durch die Schläuche strömenden Flüssigkeiten oder Gase derart gemischt werden, dass sich keine stationäre Grenzschicht an der inneren Oberfläche der Schläuche ausbilden kann.

In einer zusätzlichen Aufgabe soll der Stofftransport an der inneren Oberfläche der Schlauchwände erhöht werden, um eine verbesserte Aufnahme einer Komponente von den durch die Schläuche strömenden Flüssigkeiten oder Gasen, wie beispielsweise die Aufnahme einer Gaskomponente wie CO₂ von der Absorbensflüssigkeit, zu erreichen.

Eine weitere zusätzliche Aufgabe besteht darin, Schlauchmodule mit einem geringeren Gewicht und kleineren Abmessungen als herkömmliche Schlauchmodule bei gleichbleibenden oder verbesserten Massentransfer herzustellen.

Die Lösung der Aufgabe sieht eine Schlaucheinheit mit einem ersten Schlaucheinheitende und einem zweiten Schlaucheinheitende und mit mehreren nebeneinander angeordneten Schläuchen aus einem fluiddurchlässigen Material vor. Die Schläuche weisen jeweils eine Längsachse auf, welche von einem Schlaucheintritt zu einem Schlauchaustritt reicht. Außerdem haben die Schläuche jeweils einen Schlauchquerschnitt mit wiederkehrenden Schlauchquerschnittsverengungen. Mindestens zwischen zwei benachbart angeordneten Schläuchen sind Verbindungselemente angeordnet, die mit den Schläuchen winklig zur Längsachse der Schläuche verbunden sind. Die Schläuche dienen dabei zur Aufnahme von mindestens einem Fluid, welches durch die Schläuche von dem ersten Schlaucheinheitende zu dem zweiten Schlaucheinheitende strömt.
Die Verbindungselemente weisen einen für mindestens ein Fluid durchströmbaren Verbindungsquerschnitt auf. Der Innendurchmesser der Verbindungselemente ist kleiner als der Innendurchmesser der Schläuche.

Mit dieser erfindungsgemäßen Konstruktion wird erreicht, dass ein Fluid auf seinem Weg vom ersten Schlaucheinheitende zum zweiten Schlaucheinheitende auf die Verbindungselemente trifft und an diesen Stellen das Fluid zwangsweise in die Verbindungselemente hineingeführt wird.
Damit findet eine plötzliche Änderung der Strömungsrichung des Fluides in Richtung der Verbindungselemente statt. An diesen Stellen der plötzlichen Strömungsänderung des Fluides wird die stationäre Schicht aufgebrochen und die vorher laminare Strömung sehr stark durchmischt und teilweise durchgewirbelt.
Besonders an den Schnittstellen, wo Schlauch und Verbindungsselement entweder zusammentreffen oder voneinander abgehen, kommt es zur Durchmischung und vorzugsweise bilden sich Turbulenzen. An diesen winkligen Knickpunkten kommt es durch die scharfen Ecken und die somit erzwungene starke Richtungsänderung für das Fluid zu starken Bewegungen in Querrichtung und einem Aufbrechen der stationären Schicht, was zu einer Zwangvermischung innerhalb des Fluids führt. Diese ungeordneten Querbewegungen lassen Kräfte entstehen, die entgegen der Bewegungsrichtung der Stömung wirken und eine Durchmischung des Fluides verursachen.

Als Ergebnis wird die Entstehung einer stationären Schicht an der inneren Oberfläche der Schläuche verringert und zum Teil fast vollständig vermieden, da die entstandene turbulenzartige Strömung alle Fluidschichten innerhalb der Schläuche ausreichend stark bewegt und vermischt.
Mit der Verwendung von Verbindungselementen kann der Massentransfer in den Schlauchmodulen derart erhöht werden, dass mit dem vorhandenen Aufbau, d.h. den vorhandenen Schläuchen und ihrer Anordnung mehr Gas absorbiert werden kann. Dieser erhöhte Massentransfer in Schlauchmodulen mit den erfindungsgemäßen Schlaucheinheiten gibt die Möglichkeit zu einer Raumersparnis von mehr als 30% und einer Gewichtsersparnis von mehr als 20% im Vergleich zu einem herkömmlichen Schlauchmodul, welches den gleichen Massentransfer realisieren möchte. Das ist darauf zurückzuführen, daß die erfindungsgemäßen Schlaucheinheiten eine geringere Austauschfläche aufweisen können und dennoch im Vergleich zu herkömmlichen Schlauchmodulen den gleichen oder auch einen erhöhten Massentransfer realisieren. Damit können kleinere und leichtere Schlauchmodule hergestellt werden.
Labor- als auch Feldtests haben gezeigt, dass sich der Massentransfer von einem Gas in einer Gas/Flüssig Gastrennung um mehr als 30% erhöht.
Vorzugsweise sind die Verbindungselemente mit einem Winkel zwischen 20° bis 160° gemessen in Strömungsrichtung, zwischen den Schläuchen angeordnet. Dadurch wird je nach Wahl des Winkels erreicht, dass sich die Strömungsrichtung des Fluides stärker oder schwächer ändert und somit die gewollte Durchmischung stärker oder schwächer ausfällt. Je größer der Winkel, desto spitzer ist die Ecke, um welche das Fluid geführt wird und desto stärker ist die Durchmischung.

Zusätzlich zu den Verbindungselementen weisen die Schläuche wiederkehrende Schlauchquerschnittsverengungen auf. In einer besonderen Ausführungsform nehmen die Schläuche zwischen zwei Schlauchquerschnittsverengungen eine kugelförmige oder eine linsenförmige Gestalt an. Vorzugsweise treten diese Querschnittsverengungen periodisch auf. Die Querschnittsverengungen können Einschnürungen der Schläuche oder im Schlauchquerschnitt angeordnete axial oder an der inneren Oberfläche der Schlauchwand angeordnete Hindernisse darstellen.
Diese Schlauchquerschnittsverengungen unterstützen die Bildung von Turbulenzen und damit die Durchmischung der Strömung. Jeweils an den Ecken der Verengungen erfährt die Strömung eine starke Beschleunigung und Richtungsänderung, wodurch das Fluid durchmischt wird.

Die Verbindungselemente sind in wiederkehrenden Abständen, vorzugsweise periodisch wiederkehrenden Abständen zwischen den Schläuchen angeordnet. Damit wird eine Durchmischung des Fluides über die gesamte Länge der Schlaucheinheit erreicht. Vorzugsweise beträgt der Abstand zwischen den Verbindungselementen mindestens 1mm zueinander. In Verbindung mit den oben beschriebenen Querschnittsverengungen wird das Fluid über der gesamte Fläche der Schlaucheinheit periodisch und somit kontinuierlich einem immer wiederkehrenden Vermischungsprozeß unterzogen, der eine gleichmäßge Verteilung der selektierten Komponente in dem Fluid bewirkt.

Die Verbindungselemente weisen einen Innendurchmesser von mindestens 10% des Schlauchinnendurchmesser aus. Der Innendurchmesser der Verbindungselemente ist kleiner als der Innendurchmesser der Schläuche. Die unterschiedlichen Innendurchmesser von Schläuchen und Verbindungselementen fuhren zu einer zusätzlichen Erhöhung der Durchmischung durch die Erhöhung der Fließgeschwindigkeit des Fluids beim Übergang in einen geringeren Innendurchmesser.

Die Schläuche und vorzugsweise auch die Verbindungselemente liegen in Form von Hohlfasern vor, wobei die Hohlfasern einen Innendurchmesser von kleiner 2mm aufweisen. In einer Ausführungsform sind nur die Verbindungselemente Hohlfasern. Dann weisen die Schläuche einen Innendurchmesser von größer 2mm auf. Die Schläuche sind aus einem durchlässigen Material aufgebaut. Durchlässig bedeutet, dass das Schlauchmaterial für Gase oder Flüssigkeiten oder Gase und Flüssigkeiten durchlässig sein kann. Vorzugsweise ist das durchlässige Material gasdurchlässig.
Das Schlauchmaterial enthält vorzugsweise laminierte Membranlagen, wobei mindestens eine Membranlage aus der Gruppe von polymeren Stoffen bestehend aus Polyester, Polyamide, Polyolefine enthaltend Polyethylen und Polypropylen , Polyvinylchlorid, Polyketone, Polysulfone, Polycarbonate, Fluorpolymere wie Polytetrafluorethylen (PTFE) und Polyvinylidendifluorid (PVDF), Polyacrylate, Polyurethane, Copolyetherester, Copolyetheramide gewählt ist.
Das Schlauchmaterial kann auch Mischungen der angeführten polymeren Stoffe aufweisen, wie beispielsweise eine Mischung aus Polyethylen und PTFE. Vorzugsweise ist mindestens eine Membranlage aus gerecktem Polytetrafluorethylen (ePTFE). In einer Ausführungsform ist das ePTFE mit anorganischen Stoffen wie Metalle, Aktivkohle oder Titandioxid gefüllt.
Die polymeren Stoffe können porös oder nicht porös sein. In einer Ausführungsform weist das durchlässige Material ein durchlässiges Trägermaterial mit einer gasselektiven dichten Beschichtung auf. In dieser Ausführungsform werden aus dem Schlauchmaterial die erfindungsgemäßen Schlaucheinheiten hergestellt und anschließend mit der gasselektiven dichten Beschichtung versehen.
Die gasselektive dichte Beschichtung ist wahlweise auf der äußeren oder inneren Oberfläche der Schläuche und vorzugsweise der Verbindungselemente aufgebracht. Die gasselektive Beschichtung wird je nach dem zu entfernenden Gas gewählt. In bevorzugter Weise enthalten die Schläuche eine Beschichtung aus Perfluorodioxol, welches für polare Gase durchlässig ist. Die gasselektive Schicht läßt dabei beispielsweise eine Gaskomponente wie CO₂ zu der Absorbensflüssigkeit durch und ist gleichzeitig flüssigkeitsdicht gegenüber der Absorbensflüssigkeit.
Befindet sich die Absorbensflüssigkeit innerhalb der Schläuche, so ist eine gasselektive Beschichtung vorzugsweise auf der inneren Oberfläche der Schläuche und Verbindungselemente aufgebracht.

Die Verbindungsschläuche sind vorzugsweise auf gleiche Art und Weise wie die Schläuche aufgebaut und weisen auch den gleichen Materialaufbau auf.

Das Verfahren zur Herstellung der erfindungsgemäßen Schlaucheinheit gliedert sich in die folgenden Schritte auf: a) Bereitstellen von mindestens zwei Flachbändern, b) Bereitstellen von mindestens zwei Profilwalzen mit einer Walzenoberfläche, c) Zusammenführen der mindestens zwei Flachbänder in einem Spalt zwischen zwei Profilwalzen, d) Zuführen von parallel nebeneinander, beabstandete, stationär angeordnete Drähte im Walzenspalt, die in entsprechende in die Walzenoberfläche eingeschnittene Rillen eingreifen und e) Zusammenpressen der Flachbänder im Walzenspalt, f) Abziehen der zusammenlaminierten Flachbänder von den stationären Drähten

Vorzugsweise liegt das Flachband aus mindestens einem Membranflachband aus ePTFE vor.

Die Erfindung soll nun anhand von Zeichnungen näher erläutert werden:
Fig. 1 zeigt einen Ausschnitt einer ersten Ausführungsform der erfindungsgemäßen Schlaucheinheit
Fig.2a zeigt einen Querschnitt durch eine Schlauchwand
Fig.2b zeigt einen Querschnitt durch eine Schlauchwand mit einer gasselektiven Beschichtung
Fig.3 zeigt eine schematische Darstellung einer Vorrichtung zur Herstellung einer erfindungsgemäßen Schlaucheinheit
Fig.4 zeigt eine beispielhafte Anordnung von Rillen in der Walzenoberfläche
Fig. 5 zeigt einen Querschnitt durch den Spalt zwischen den beiden Profilwalzen der Vorrichtung nach Fig.3
Fig.6 zeigt eine schematisierte Längsschnittansicht eines Absorbermembranmoduls

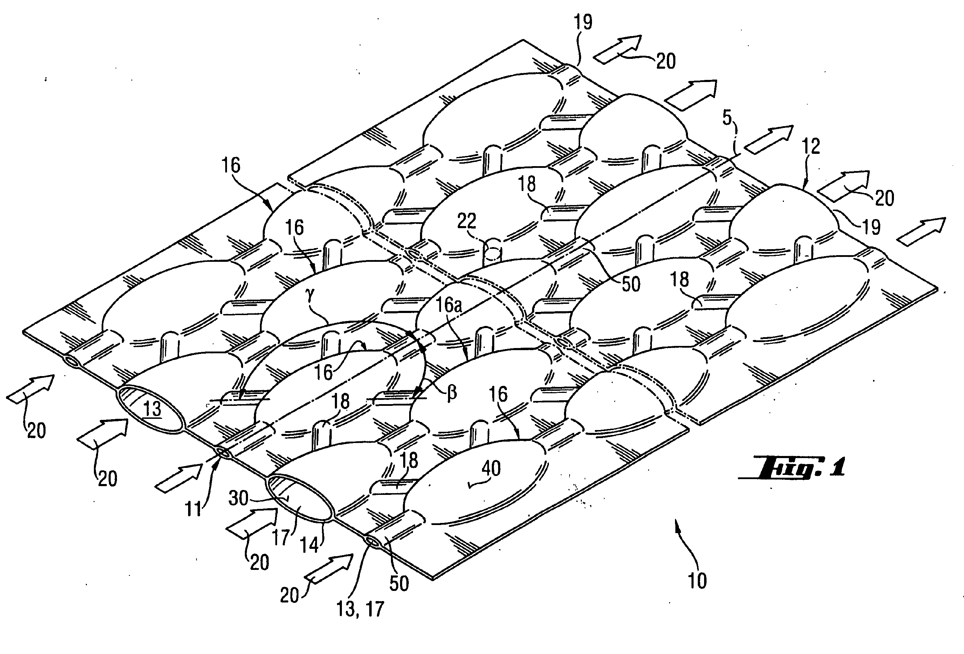

Eine erste Ausführungsform der erfindungsgemäßen Schlaucheinheit 10 ist in Figur 1 dargestellt.

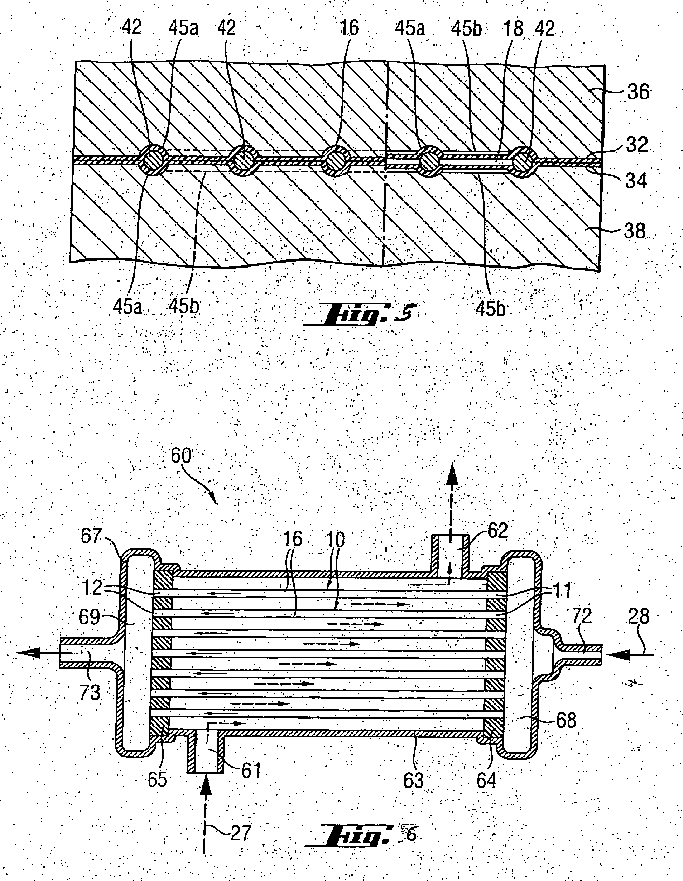

Unter einer Schlaucheinheit 10 werden mehrere nebeneinander angeordnete Schläuche 16 verstanden. Die Schläuche 16 sind so miteinander verbunden, dass ein flächiges Gebilde entsteht. Eine solche Schlaucheinheit 10 ist Bestandteil von einem in Fig. 6 dargestellten Schlauchmodul 60 zur Gastrennung. Mindestens eine Schlaucheinheit 10, vorzugsweise mehrere Schlaucheinheiten 10 können nebeneinander, übereinander oder gewickelt in ein Schlauchmodul 60 gepackt werden.

Die Schlaucheinheit 10 enthält mehrere nebeneinander und parallel zueinander angeordnete Schläuche 16. Die Schläuche 16 dienen zur Aufnahme von mindestens einem Fluid 20, welches durch die Schläuche 16 von einem ersten Schlaucheinheitende 11 zu einem zweiten Schlaucheinheitende 12 strömt. Dabei weisen die Schläuche 16 einen im wesentlichen runden Schlauchquerschnitt 13 auf. Im wesentlich rund bedeutet, dass der Schlauchquerschnitt 13 auch andere rundartige Formen wie beispielsweise oval annehmen kann.
Die Länge der Schläuche 16 in der Schlaucheinheit 10 sind dem jeweiligen Verwendungszweck und der Größe des Schlauchmoduls entsprechend angepaßt. Vorzugsweise haben die Schläuche 10 eine Länge von 100 mm bis 6000 mm.

Die Schlauchwand 14 eines jeden Schlauches 16 weist eine innere Oberfläche 30 und eine äußere Oberfläche 40 auf. Weiterhin ist jeder Schlauch 16 durch eine Längssache 5 gekennzeichnet, welche von einem Schlaucheintritt 17 zu einem Schlauchaustritt 19 reicht.

Der Schlauchinnendurchmesser beträgt 0,1- 10 mm, vorzugsweise 3 mm. Es kann aber auch jeder andere Schlauchinnendurchmesser zur Anwendung kommen. In einer bevorzugten Ausführungsform liegen die Schläuche 16 in Form von Hohlfasern vor. Hohlfaser weisen einen sehr geringen Schlauchinnendurchmesser von weniger als 2mm auf. Der Schlauchinnendurchmesser wird jeweils an der inneren Oberfläche 30 der Schlauchwand 14 ermittelt. Der Schlauchinnendurchmesser wird nach einem optischen Meßverfahren mit einem Nikon V 12 Profilprojektor ermittelt.

In der in Figur 1 dargestellten Ausführungsform sind die Schläuche 16 mit Querschnittsverengungen 50 ausgebildet. Diese Querschnittsverengungen 50 unterstützen eine verbesserten Durchmischung des mindestens einen Fluids 20.

Die Querschnittsverengungen 50 stellen mindestens eine Verengung in einem Schlauchquerschnitt 13 dar, vorzugsweise hat ein Schlauch 16 mehrere voneinander beabstandete Querschnittsverengungen 50. Vorzugsweise sind diese Querschnittsverengungen 50 periodisch, so dass über die gesamte Länge des Schlauches 16 die Querschnittsverengungen 50 gleichmäßig verteilt sind. In einer bevorzugten Ausführung beträgt der Abstand von einer Querschnittsverengung 50 zu einer benachbarten Querschnittsverengung 50 zwischen 1-10 mm, in anderen Ausführungen beträgt der Abstand zwischen zwei benachbarten Querschnittsverengungen 50 1 mm. Der Durchmesser einer Querschnittsverengung 50 beträgt 0,1- 3 mm. Die Länge einer Querschnittsverengung 50 beträgt 0,5- 4 mm, vorzugsweise 1 mm.
Eine Querschnittsverengung 50 kann durch Einschnürung oder den Einbau von Hindernissen in den Schlauchquerschnitt 13 geschaffen werden. Bei der Ausführungsform von Figur 1 sind die Querschnittsverengungen 50 durch Einschnürungen gebildet. Diese Einschnürungen können durch das lokale Verformen des Schlauchmaterials wie beispielsweise durch Verpressen an der Stelle der äußeren Oberfläche 40 an der eine Verengung vorgesehen ist, hergestellt werden.
Zwischen jeweils zwei durch Einschnürungen geschaffenen Querschnittsverengungen 50 nehmen die Schläuche 16 eine kugelförmige oder vorzugsweise linsenförmige Gestalt an. In anderen Ausführungen sind die Querschnittsverengungen 50 in Form einer gewellten Schlauchwand 14, beispielsweise sinusförmig gewellt, dargestellt.
Im Falle von Querschnittsverengungen 50 in Form von in den Schlauchquerschnitt 13 eingebrachten Hindernissen, kommen dafür beispielsweise scheibenförmige Einbauten in Frage. Diese Einbauten können sich an der Längsache 5 der Schläuche 16 oder an der inneren Oberfläche 30 der Schläuche 16 befinden.

Das die Schläuche 16 durchströmende Fluid 20 kann ein Gas, ein Dampf, eine Flüssigkeit oder eine Mischung dieser zuvor genannten Fluide sein. Vorzugsweise liegt eine Flüssigkeit oder Absorbensflüssigkeit vor. Bei einer Gastrennung ist die Wahl der Absorbensflüssigkeit von den abzutrennenden Gaskomponenten abhängig. Bei abzutrennenden Gaskomponenten wie CO₂, H₂S oder NH₃ ist die Absorbensflüssigkeit vorzugsweise eine aminische Flüssigkeit, welche mit den abzutrennenden Gaskomponenten eine chemische Reaktion eingeht. Vorzugsweise werden dafür Alkanolamine verwendet. Beispielsweise bei der Abtrennung von CO₂ aus einem Gasgemisch, wie zum Beispiel Abgas eines Kraftwerkes oder einer Müllverbrennungsanlage, kommt als Absorbensflüssigkeit ein Gemisch aus Wasser mit 30 % Monoethanolamin (MEA) zur Anwendung. Weitere Absorbensflüssigkeiten können Methyldiethanolamine (MDEA) oder NFM- NAM (N- Formylmophdin - N-acetylmorpholine) sein. Bei der Trocknung von Gasen kommen als Fluid 20 hydroskopische Flüssigkeiten wie beispielsweise Triethylenglycol zur Anwendung. Zur Gastrennung von SO₂ aus einem Gasgemisch wird Natriumsulfit (Na₂SO₃) als Fluid 20 verwendet.
In Abhängigkeit vom konkreten Anwendungsfall fließt die Absorbensflüssigkeit mit einer Geschwindigkeit zwischen 1mm/s bis 1m/s durch die Schläuche 16 der Schlaucheinheit 10. Vorzugsweise liegt eine Geschwindigkeit von 2-10 cm/s vor.

Zwischen den Schläuchen 16 befinden sich Verbindungselemente 18. Die Verbindungselemente 18 sind mindestens zwischen zwei benachbart angeordneten Schläuchen 16 angeordnet und haben einen durchströmbaren Verbindungselementequerschnitt 22, so dass durch die Verbindungselemente 18 mindestens ein Fluid 20 strömen kann. Somit dienen die Verbindunsgelemente 18 zum Transport von mindestens einem Fluid 20 zwischen den Schläuchen 16 und bewirken eine Verknüpfung aller Schläuche 16 einer Schlaucheinheit 10 miteinander.

Der Verbindungselementequerschnitt 22 ist im wesentlichen rund, wobei auch Querschnittsformen wie oval zu Anwendung kommen. Die Verbindungselemente 18 weisen einen kleineren Innendurchmesser wie die Schläuche 16 auf. Vorzugsweise ist aber der Verbindungselementeinnendurchmesser wesentlich kleiner als der Schlauchinnendurchmesser. Zur Sicherung des Durchflußes von mindestens einem Fluid 20 beträgt der Innendurchmesser der Verbindungselemente 18 mindestens 10% des Schlauchinnendurchmessers. Ein geringerer Innendurchmesser der Verbindungselemente 18 hat den Vorteil, dass die Fließgeschwindigkeit des Fluids 20 beim Übergang vom Schlauch 16 in das Verbindungselement 18 beschleunigt wird. Eine Erhöhung der Fließgeschwindigkeit begünstigt die Durchmischung, desweiteren auch die Bildung einer turbulenten Strömung.
Die Länge der Verbindungselemente 18 zwischen zwei nebeneinandergeordneten Schläuchen 16 beträgt vorzugsweise 1 mm, kann aber auch größer oder kleiner sein. Vorzugsweise ist der Innendurchmesser 22 der Verbindungselemente 18 kleiner als 2 mm. Der Innendurchmesser wird ebenfalls mit einem Nikon V 12 - Profilprojektor bestimmt.
Durch die Verbindunsgelemente 18 kommt es zu einer Erhöhung der Durchmischung innerhalb der Strömung des mindestens einen Fluids 20 durch die Schlaucheinheit 10 und somit zu einer Erhöhung des Massentransfers. Am ersten Schlaucheintrittende 11 strömt mindestens ein Fluid 20 in die Schläuche 16. Die Strömungsrichtung wird zumindest am Schlaucheintritt 17 durch die Form der Schläuche 16 vorgegeben. Wenn das Fluid 20 auf ein Verbindungselement 18 trifft, erfährt es eine Umlenkung seiner Strömungsrichtung in das Verbindungselement 18. Diese Umlenkung verursacht Wirbel und Turbulenzen und somit eine Durchmischung in dem Fluid 20.

Vorzugsweise sind die Verbindungselemente 18 schlauchförmig. Besonders bevorzugt sind Verbindungselemente 18 in Form von Hohlfasern.

Die Verbindungselemente 18 sind erfindungsgemäß winklig zur Längsachse 5 der Schläuche 16 zwischen mindestens zwei benachbart angeordneten Schläuchen 16 angeordnet. Vorzugsweise liegt der Winkel, in dem die Verbindungselemente 18 zwischen mindestens zwei benachbart angeordneten Schläuchen 16 angeordnet sind, zwischen 20° bis 160°, gemessen in Strömungsrichtung. Die Größe des Winkels α kann frei gewählt werden, wobei die Wahl des Winkels α den Grad der Durchmischung des mindestens einen Fluids 20 beeinflußt. Bei einem Winkel α von 90°, befinden sich die Verbindungselemente 18 waagerecht zur Längsachse 5 zwischen den Schläuchen 16. In der dargestellten Schlaucheinheit 10 befinden sich die Verbindungselemente 18 schräg zwischen einem ersten Schlauch 16a und einem zweiten Schlauch 16b angeordnet. Schräg angeordnet bedeutet, dass das Verbindungselement 18 mit einem Winkel β kleiner 90° zur Längsache 5 des ersten Schlauches 16a und mit einem Winkel χ größer 90° zur Längsachse 5 des zweiten Schlauches 16b zwischen dem ersten Schlauch 16a und dem zweiten Schlauch 16b angeordnet ist.
Somit besteht zwischen dem ersten Schlauch 16a und dem zweiten Schlauch 16b eine durchströmbare Verbindung über die Verbindungselemente 18, so dass mindestens ein Fluid 20 zwischen dem ersten Schlauch 16a und dem zweiten Schlauch 16b fließt.

Wie oben angeführt beeinflußt die Wahl der Winkel, mit denen sich ein Verbindungselement 18 zwischen den Schläuchen 16 befindet, den Grad der Durchmischung des Fluid 20.
Weist beispielsweise ein Verbindungselement 18 einen Winkel β kleiner 90° zu einem Schlauch 16 auf, dann sind geringere Durchmischungen zu erwarten als wenn ein Winkel χ größer 90° vorliegt. Das ist darauf zurückzuführen, dass bei einem Winkel χ größer 90° eine Umlenkung der Strömung des Fluids 20 in annähernd entgegengesetzter Richtung zur ursprünglichen Strömungsrichtung des Fluids 20 erfolgt. Eine derartige starke Umlenkung des Fluids 20 verursacht starke Querbewegungen und turbulenzartige Strömungen in dem Bereich, wo der Winkel zwischen Verbindungselement 18 und Schlauch 16 gebildet ist.
Vorzugsweise liegen die Verbindungselemente 18 abwechselnd in Winkeln β kleiner 90° und χ größer 90° bezogen auf die Längsachse 5 eines Schlauches 16 vor.

Die Anzahl der Verbindungselemente 18 in einer Schlaucheinheit 10 ist abhängig vom gewünschten Durchmischungsgrad. Je mehr Verbindungselemente 18 sich zwischen den Schläuchen 16 befinden, desto größer ist die Durchmischung, wobei allerdings darauf zu achten ist, dass der Druckverlust über die Schlaucheinheit 10 nicht zu groß wird.
In einer Ausführungsform weisen die Verbindungselemente wiederkehrende Abstände zueinander auf, wobei es sich vorzugsweise um periodisch wiederkehrende Abstände handelt. Es wurde festgestellt, dass unabhängig von der Anzahl der Verbindungselemente 18 der Abstand zwischen den Verbindungselementen 18 mindestens 1 mm beträgt.

Die Verbindungselemente 18 befinden sich in einer Ausführung im Bereich der Querschnittsverengungen 50. Vorzugsweise sind die Verbindungselemente 18 unmittelbar oberhalb oder unterhalb der Querschnittsverengungen 50 angeordnet.

Die Schläuche 16 sind aus einem durchlässigen Material aufgebaut. Durchlässig bedeutet, dass das Schlauchmaterial für Gase oder Flüssigkeiten oder Gase und Flüssigkeiten durchlässig sein kann. In einem bevorzugten Ausführungsfall ist das Schlauchmaterial durchlässig für Gase jedoch undurchlässig für Flüssigkeiten.

In einer Ausführungsform weist das durchlässige Material ein durchlässiges Schlauchmaterial mit einer polymeren dichten Beschichtung auf
Das durchlässige Schlauchmaterial kann porös oder nichtporös sein und in Form mindestens einer Membrane vorliegen. Vorzugsweise enthält das Schlauchmaterial mindestens eine poröse Membrane. Die Membrane ist als Membranschlauch oder Membran-Hohlfaser ausgebildet. In einer bevorzugten Ausführung ist die mindestens eine poröse Membrane aus der Gruppe von Stoffen bestehend aus Polyester, Polyamide, Polyolefine enthaltend Polyethylen und Polypropylen, Polyvinylchlorid, Polyketone, Polysulfone, Polycarbonate, Fluorpolymere wie Polytetrafluorethylen (PTFE) und Polyvinylidendifluorid (PVDF), Polyacrylate, Polyurethane, Copolyetherester, Copolyetheramide, Polyimide, Polyetherimide, gewählt. Das Schlauchmaterial kann auch Mischungen der angeführten polymeren Stoffe aufweisen, wie beispielsweise eine Mischung aus Polyethylen und PTFE. Am meisten bevorzugt ist eine poröse Membrane aus gerecktem Polytetrafluorethylen (PTFE). In einer Ausführungsform ist das ePTFE mit anorganischen Stoffen wie Metalle, Aktivkohle oder Titandioxid gefüllt.
Die polymeren Stoffe können porös oder nicht porös sein.

Ein Verfahren zur Herstellung solcher poröser Membrane aus gerecktem PTFE ist beispielsweise in den Patenten US 3,953,566 und US 4,187,390 beschrieben. Dank der inerten Struktur und der hydrophoben Oberfläche dieser Membrane eignet sich dieses Material besonders gut für Stoffaustauschsysteme. Die Membrane aus ePTFE liegt mit einer Dicke zwischen 5-500µm, vorzugsweise zwischen 50-300 µm vor. Dieses Material zeichnet sich durch eine Vielzahl von offenen, miteinander verbundenen Hohlräumen aus, einem großem Hohlraumvolumen und einer großen Stärke. Expandiertes Polytetrafluorethylen ist weich, flexibel, hat stabile chemische Eigenschaften, eine hohe Durchlässigkeit gegenüber Gasen sowie Dämpfen und eine Oberfläche mit einer guten Abweisung gegen Verunreinigungen.
Somit ist das Material durchlässig für Gas. Die Porosität und die Porengröße ist so gewählt, dass die Gasdiffusion nicht behindert wird. Die durchschnittliche Porengröße kann 0,02 - 3 µm betragen, vorzugsweise 0,1- 0,5 µm. Die Porosität beträgt 30 - 90%, vorzugsweise 50 - 80%. Gleichzeitig ist das Material flüssigkeitsdicht.
Die Schläuche 16 können aus einer oder mehreren Lagen der Membrane bestehen, welche übereinander laminiert sind.

Unter porös wird eine Struktur von miteinander verbundenen Poren oder Hohlräumen in der Art, dass durchgehende Wege und Verbindungen durch das Material geschaffen sind, verstanden. Die Messung der Porengröße kann mit einem Coulter Porometer^{™} erfolgen, hergestellt bei Coulter Electronics, Inc., Hialeah, Fluoride.

In einer Ausführungsform wird eine polymere Beschichtung auf das poröse Schlauchmaterial aufgetragen. Diese polymere Beschichtung dient als zusätzliche Schutzbarriere gegen Verunreinigungen und Flüssigkeiten, insbesondere gegenüber dem flüssigen Fluid 20 in den Schläuchen 16. Die polymere Beschichtung kann sich auf jeder Seite des Schlauchmaterials befinden, vorzugsweise auf der Seite welche der Flüssigkeit zugewandt ist.

Die polymere Beschichtung nach dieser Erfindung bildet eine dichte Schicht im Gegensatz zum porösen Schlauchmaterial. Als dichte Schicht ist eine Schicht gemeint, die als Sperre gegen den Durchtritt von Verunreinigungen und Füssigkeiten in und durch das Schlauchmaterial wirkt, aber den Durchtritt von gasförmigen Komponenten mittels Diffusion in ausreichender Menge gestattet. Dabei kann die dichte Schicht so ausgeprägt sein, dass nur bestimmte gasförmige Komponenten wie beispielsweise CO₂ durchgelassen werden. Diese dichte Schicht kann auch als eine dünne porenfreie gasselektive Schicht bezeichnet werden. In einer bestimmten Ausführungsform der Erfindung ist die polymere Beschichtung ein amorphes Polymer wie bevorzugterweise ein Perfluordioxol. Als bevorzugte polymere Schicht wird eine Perfluordioxol-Schicht mit einer Dicke zwischen 0,1 - 10 µm verwendet.
In einer besonders bevorzugten Ausführung weist die polymere Beschichtung 87mol% 2,2-bis-trifluoromethyl-4,5-difluoro-1,3-dioxole (PDD) und 13mol% Polytetrafluorethylen (PTFE) auf. Das ist ein amorphes glasiges Polymer, verfügbar bei der Firma Dupont, Wilmington, DE,USA unter dem Markennamen Teflon AF 2400.

Weitere anwendbare polymere Beschichtungen sind beispielsweise ein Perfluordioxol unter dem Namen CYTOP von Asahi Glass oder ein poly(1-trimethyl-silyl-1-propyne) (PTMSP).

Die dichte Schicht kann eine Dicke von 0,1-10µm haben, vorzugsweise hat die Schicht eine Dicke von 1 µm.
Geeignete Verfahren zur Herstellung des Verbundes zwischen Trägermaterial und polymere Beschichtung sind in der WO98/13234 A1 beschrieben.

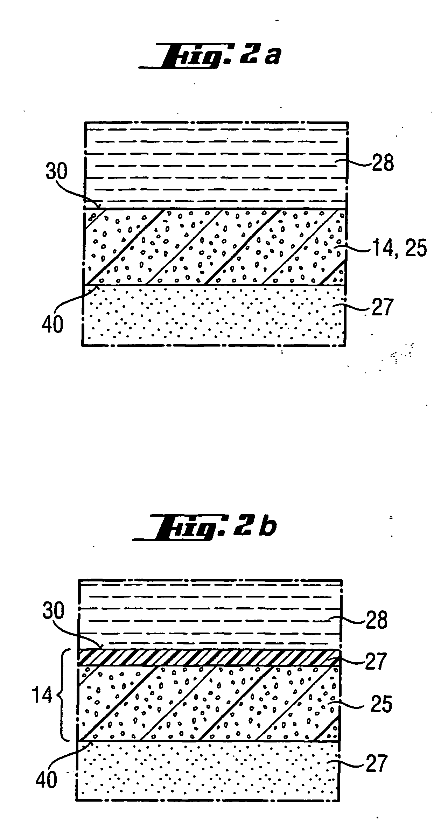

In Figur 2a ist ein Querschnitt durch ein erfindungsgemäß verwendetes durchlässiges Material dargestellt. Der Querschnitt stellt einen Schnitt durch die Schlauchwand 14 eines erfindungsgmäß verwendeten Schlauches 16 dar. Ein poröses Schlauchmaterial 25 zum Beispiel aus gerecktem PTFE mit einer Dichte von ungefähr 200µm weist eine äußere Oberfläche 40 und eine innere Oberfläche 30 auf. Die äußere Oberfläche 40 weist zu einem Gasgemisch 27 und die innere Oberfläche 30 weist zu einer Absorbensflüssigkeit 30.

Eine weitere Ausführung ist in Fig. 2b dargestellt. Ein poröses Trägermaterial 25 zum Beispiel aus gerecktem PTFE mit einer Dicke von ungefähr 200 µm weist eine polymere Beschichtung 26 beispielsweise aus Teflon AF 2400 mit einer Dicke von ungefähr 1 µm auf. Das zu trennende Gasgemisch 27 befindet sich auf der nicht beschichteten Oberfläche 40 des Trägermaterials 25. Die polymere Beschichtung 26 ist auf der Seite des Trägermaterials 25 aufgebracht, die zur Absorbensflüssigkeit 28 weist und bildet eine innere Oberfläche 30.

Die Verbindungselemente 18 sind vorzugsweise aus dem gleichen Material wie die Schläuche 16 gefertigt und weisen im wesentlichen den gleichen Aufbau wie in Figur 2 dargestellt auf. Zu dem Materialaufbau der Verbindungselemente 18 wird deshalb auf die obige Beschreibung der Schläuche 16 verwiesen.

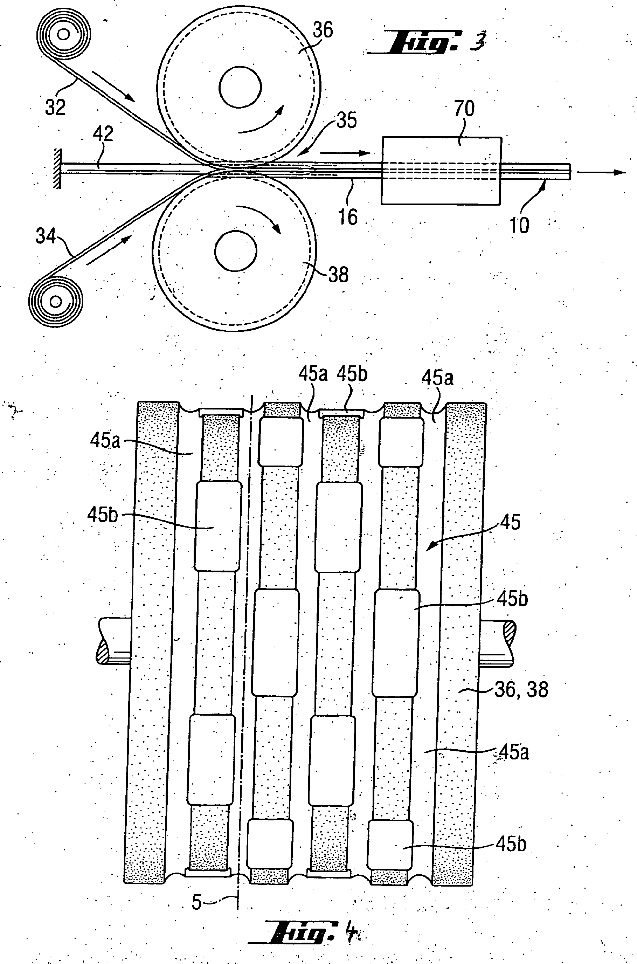

In den Figuren 3, 4 und 5 ist ein Verfahren zur Herstellung einer erfindungsgemäßen Schlaucheinheit 10 dargestellt. In Figur 3 ist eine Vorrichtung zur Durchführung des Herstellungsverfahrens abgebildet.
Die Schlaucheinheit 10 besteht aus mindestens zwei zusammenlaminierten Membranlagen 32, 34 vorzugsweise aus porösem gerecktem PTFE. Die Schläuche 16 können auch aus mehreren übereinanderlaminierten Membranlagen bestehen.

Eine erste Membranlage 32 und eine zweite Membranlage 34 werden in Form von Flachbändern in den Spalt 35 zwischen einer ersten Profilwalze 36 und einer zweiten Profilwalze 38 eingerührt. In der Oberfläche der Profilwalzen 36, 38 sind Rillen 45 eingeschnitten, deren beispielhafte Anordnung in Figur 4 schematisch dargestellt ist. Diese Rillen 45 sind einander jeweils gegenüberliegend, so dass im Querschnitt runde Hohlräume gebildet werden. Am Beispiel von einer Schlaucheinheit 10 aus Schläuchen 16 und rechtwinklig zwischen den Schläuchen 16 angeordneten Verbindungselementen 18 ist die dazugehörige Anordnung der Rillen 45 auf einer ersten Profilwalze 36 gezeigt. Längsrillen 45a geben den Schläuchen 16 die gewünschte Form und Querrillen 45b geben den Verbindungselementen 18 die gewünschte Form. Die Rillen 45 können jede beliebige Anordnung in der Oberfläche der Profilwalzen 36, 38 annehmen, um eine gewünschte Form und Anordnung der Schläuche 16 und Verbindungselemente 18 zu realisieren.
In den durch die Rillen 45 gebildeten Hohlräume können Drähte oder Dorne 42 stationär angeordnet sein. Die Drähte 42 haben einen Außendurchmesser, der geringfügig kleiner ist als der Innendurchmesser des von den Rillen 45 gebildeten Hohlraumes. In einer Ausführungsform befinden sich nur in den Längsrillen 45a Drähte 42.

Die beiden Membranlagen 32, 34 werden durch den Walzenspalt 35 gezogen, wobei sie zusammenlaminiert werden und sich im Bereich der Rillen 45 um die dort angeordneten Drähte 42 legen, so dass die Schläuche 16 gebildet werden. Figur 5 zeigt dazu einen Querschnitt durch den Spalt 35 zwischen den beiden Profilwalzen 36, 38. Der linke Teil von Figur 5 stellt einen Querschnitt an der Stelle auf den Walzenoberflächen dar, an der nur Längsrillen 45a geformt sind. Die gestrichelten Linien zeigen die Querrillen 45b, die an dieser Stelle noch verdeckt sind. Der rechte Teil von Figur 5 zeigt einen Querschnitt wo neben den Längsrillen 45a auch Querrillen 45b zu sehen sind. Zusätzlich zu den Schläuchen 16 werden dort die Verbindungselemente 18 durch die Form der Querrillen 45b gebildet. Wie in Figur 5 prinzipiell dargestellt, sind die Drähte 42 in einer bevorzugten Ausführungsform entsprechend der Anordnung der Längsrillen 45a geformt. Auf diese Weise legen die Längsrillen 45a, die Querrillen 45b und die Drähte 42 die Form und Anordnung der Schläuche 16 und Verbindungselemente 18 fest. Der Innendurchmesser der Schläuche 16 wird durch den Außendurchmesser der Drähte 42 bestimmt, der Innendurchmesser der Verbindungselemente 18 wird durch die Form der Querrillen 45b festgelegt. Die Verbindung der Membranlagen 32, 34 erfolgt über den mittels der Profilwalzen 36, 38 erzeugten Druck. Dabei werden die Profilwalzen 36, 38 derart angezogen, dass der zwischen den Profilwalzen 36, 38 verbleibende Zwischenraum der ungefähren Wandstärke der Schläuche 16 entspricht. Zusätzlich kann eine oder mehrere bekannte Verbindungstechnologien, wie beispielsweise Kleben, Wärme oder Laserbestrahlung angewandt werden. So können den Profilwalzen 36, 38 zum Beispiel Kleberauftragswalzen vorgeschaltet werden. Die Membranlagen 32, 34 können entweder während ihrer Verweilzeit im Walzenspalt 35 oder aber nach dem Verlassen dieser mit Wärme beaufschlagt werden. Dafür können entweder die Profilwalzen 36, 38 und/oder die Drähte 42 beheizt sein oder die Membranlagen 32, 34 werden durch ein Sinterbad 70, Wärmekontakteinheit 70 oder eine Heißlufteinheit 70 geführt. Stattdessen können auch Infrarotstrahlen verwendet werden. In dieser Einheit 70 wird die Oberfläche der zusammenlaminierten Membranlagen 32, 34 versintert. In anderen Ausführungen können die Membranlagen 32, 34 auch verklebt oder verschweißt werden. Bezogen auf den Sinterprozeß wird eine Verweilzeit von 2-3sec bei einer Temperatur von 350 - 400°C in der Einheit 70 bevorzugt. Die zusammenlaminierten Membranlagen 32, 34 werden vorzugsweise nach der Einheit 70 von den Drähten 42 gezogen. Weitere Ausführungen und Varianten des beschriebenen Herstellungsverfahrens können der EP 0 677 321 (B1) entnommen werden. In einer Ausführung wird anschließend die Schlaucheinheit 10 entsprechend der in der WO98/13234 (Witzko, Bier) beschriebenen Verfahren zum Aufbringen der gasselektiven polymeren Beschichtung 26 behandelt.
In Fig. 6 ist beispielhaft eine mögliche Ausgestaltung der Erfindung dargestellt. Die erfindungsgemäße Schlaucheinheit 10 ist Bestandteil eines Schlauchmoduls 60 für den Stoffaustausch zwischen mindestens einem ersten Fluid 28 welches durch die Schläuche 16 strömt und mindestens einem zweiten Fluid 27 welches um die Schäuche 16 strömt. Bevorzugtermaßen dient das Schlauchmodul 60 als Absorptionsmodul 60 zur Aufnahme einer Gaskomponente aus einer Gasphase 27 in eine Absorbensflüssigkeit 28. Anstelle des Absorptionsmoduls 60 kann es sich auch um ein Desorptionsmodul handeln.

Das Schlauchmodul 60 enthält einen Gaseinlaß 61 und einen Gasauslaß 62, die an einander schräg gegenüberliegenden Enden eines Gehäuses 63 ausgebildet sind. Die Stirnseiten des Gehäuses 63 sind von einer ersten Platte 64 und zweiten Platte 65 aus Vergußmasse verschlossen.
Die mindestens eine Schlaucheinheit 10 ist zwischen den Stirnseiten des Gehäuses 63 eingesetzt. Vorzugsweise befinden sich weitere erfindungsgemäße Schlaucheinheiten 10 in dem Gehäuse 63. Die mindestens eine Schlaucheinheit 10 hat ein erstes Schlaucheinheitende 11 und ein zweites Schlaucheinheitende 12. Die Verschlußplatten 64, 65 werden von dem ersten Schlaucheinheitende 11 und dem zweiten Schlaucheinheitende 12 der Schlaucheinheit 10 vollständig durchsetzt und mit den darin eingefaßten Schläuchen 16 jeweils mit einem Deckel 66, 67 verschlossen. Zwischen den Deckeln 66, 67 und den Verschlußplatten 64, 65 bildet sich jeweils ein Hohlraum 68, 69. Die Deckel 66, 67 münden in mit Schlauch- oder Rohrleitungen koppelbaren Anschlußstutzen für den Absorbensflüssigkeiteinlaß 72 bzw. den Absorbensflüssigkeitauslaß 73.
Die Absorbensflüssigkeit 28 gelangt über den Absorbensflüssigkeitseinlaß 72 und den ersten Hohlraum 68 in die stirnseitigen ersten Enden 11 der Schläuche 16 der Schlaucheinheiten 10. Die Gasphase 27 wird über den Gaseinlaß 61 in das Innere des Gehäuses 63 eingeleitet und strömt vorzugsweise im Gegenstrom zu dem Gasauslaß 62. Dabei gleitet die Gasphase 27 über die äußere Oberfläche 40 der einzelnen Schläuche 16 der erfindungsgemäßen Schlaucheinheiten 10 hinweg. Die Absorbensflüssigkeit 28 durchströmt die Schläuche 16 und Verbindungselemente 18 der Schlaucheinheiten 10 und nimmt dabei die abzutrennende Gaskomponente aus der Gasphase 27 auf. Die mit der Gaskomponente beladene Absorbensflüssigkeit 28 mündet in den zweiten Hohlraum 69 und fließt von dort aus in den Absorbensflüssigkeitsauslaß 73.

Die Darstellung des Schlauchmoduls 60 in Figur 6 ist als Beispiel für eine Reihe weiterer möglicher Modulkonstruktionen zu sehen. Es ist auch möglich, dass die Gasphase 27 durch die Schläuche 16 und Verbindungselemente 18 strömt und die Absorbensflüssigkeit 28 fließt um die Schlaucheinheit 10 herum. Außerdem kann die Gasphase 27 und die Absorbensflüssigkeit 28 im Gleichstrom oder Kreuzstrom zueinander fließen.

Neben der Gastrennung kann die erfindungsgemäße Schlaucheinheit auch gezielt als Mischvorrichtung für inhomogene Fluide oder als Wärmetauscher für Fluide mit unterschiedlichen Temperaturen verwendet werden.
Weiterhin ist die Erfindung auf die oben beschriebenen Ausführungsformen nicht beschränkt. Neben der Gastrennung von CO₂ aus Erdgas oder Abgas kann die erfindungsgemäße Schlaucheinheit 10 auch zur Gastrennung von anderen gasförmigen Komponenten wie zum Beispiel H₂S oder SO₃ aus einem Gasgemisch mit Hilfe der gas/flüssig Separation dienen. Weitere Anwendungen der erfindungsgemäßen Schlaucheinheit sind in der Be- und Entgasung von Flüssigkeiten zu sehen.

## Patentansprüche

1. Schlaucheinheit (10) mit einem ersten Schlaucheinheitende (11) und einem zweiten Schlaucheinheitende (12) und mit mehreren nebeneinander angeordneten Schläuchen (16) aus einem fluiddurchlässigen Material, die Schläuche (16) weisen jeweils eine von einem Schlaucheintritt (17) zu einem Schlauchaustritt (19) reichende Längsachse (5) und einen Schlauchquerschnitt (13) auf,
die Schlaucheinheit (10) weist Verbindungselemente (18) auf, welche mindestens zwischen zwei benachbart angeordneten Schläuchen (16) angeordnet sind, welche mit den Schläuchen (16) winklig zur Längsachse (5) der Schläuche (16) verbunden sind und welche einen für mindestens ein Fluid (20) durchströmbaren Verbindungselementequerschnitt (22) aufweisen,
**dadurch gekennzeichnet, daß** der Schlauchquerschnitt (13) wiederkehrende Schlauchquerschnittsverengungen aufweist, und daß der Innendurchmesser der Verbindungselemente (18) kleiner als der Innendurchmesser der Schläuche (16) ist.

2. Schlaucheinheit (10) nach Anspruch 1, wobei die Verbindungselemente (18) mit einem Winkel zwischen 20° bis 160° bezogen auf die Längsachse (5) zwischen den Schläuchen (16) angeordnet sind.

3. Schlaucheinheit (10) nach Anspruch 1, wobei die Schläuche (16) zur Aufnahme von mindestens einem Fluid (20) dienen, welches durch die Schläuche (16) von dem ersten Schlaucheinheitende (11) zu dem zweiten Schlaucheinheitende (12) strömt.

4. Schlaucheinheit (10) nach Anspruch 1, wobei die Schläuche (16) zwischen zwei Schlauchquerschnittsverengungen (50) eine kugelförmige Gestalt annehmen.

5. Schlaucheinheit (10) nach Anspruch 1, wobei die Schläuche (16) zwischen zwei Schlauchquerschnittsverengungen (50) eine linsenförmige Gestalt annehmen.

6. Schlaucheinheit (10) nach Anspruch 1, wobei die Schläuche (16) periodisch wiederkehrende Schlauchquerschnittsverengungen (50) aufweisen.

7. Schlaucheinheit (10) nach Anspruch 1, wobei die Schlauchquerschnittsverengungen (50) Einschnürungen der Schläuche (16) darstellen.

8. Schlaucheinheit (10) nach Anspruch 1, wobei die Schlauchquerschnittsverengungen (50) im Schlauchquerschnitt (13) der Schläuche (16) angeordnete Hindernisse darstellen.

9. Schlaucheinheit (10) nach Anspruch 1, wobei die Verbindungselemente (18) im Bereich der Schlauchquerschnittsverengungen (50) angeordnet sind.

10. Schlaucheinheit (10) nach Anspruch 1, wobei die Verbindungselemente (18) den gleichen Materialaufbau wie die Schläuche (16) aufweisen.

11. Schlaucheinheit (10) nach Anspruch 1, wobei die Verbindungselemente (18) wiederkehrende Abstände zueinander aufweisen.

12. Schlaucheinheit (10) nach Anspruch 11, wobei die Verbindungselemente (18) periodisch wiederkehrende Abstände zueinander aufweisen.

13. Schlaucheinheit (10) nach Anspruch 12, wobei die Verbindungselemente (18) mindestens einen Abstand von 1mm zueinander aufweisen.

14. Schlaucheinheit (10) nach Anspruch 1, wobei die Schläuche (16) einen Schlauchinnendurchmesser von 0,1-5 mm aufweisen

15. Schlaucheinheit (10) nach Anspruch 14, wobei die Verbindungselemente (18) einen Innendurchmesser von mindestens 10% des Schlauchinnendurchmessers aufweisen.

16. Schlaucheinheit (10) nach Anspruch 1, wobei die Schläuche (16) Hohlfasern sind.

17. Schlaucheinheit (10) nach Anspruch 1, wobei die Verbindungselemente (18) Hohlfasern sind.

18. Schlaucheinheit (10) nach Anspruch 1, wobei das durchlässige Material gasdurchlässig ist.

19. Schlaucheinheit (10) nach Anspruch 1, wobei das durchlässige Material flüssigkeitsdicht ist.

20. Schlaucheinheit (10) nach Anspruch 1, wobei die Schläuche (16) eine Mehrzahl laminierter Membranlagen aufweisen.

21. Schlaucheinheit (16) nach Anspruch 20, wobei mindestens eine Membranlage aus der Gruppe von Stoffen bestehend aus Polyester, Polyamide, Polyolefine enthaltend Polyethylen und Polypropylen, Polyvinylchlorid, Polyketone, Polysulfone, Polycarbonate, Fluorpolymere wie Polytetrafluorethylen (PTFE) und Polyvinylidendifluorid , Polyacrylate, Polyurethane, Copolyetherester, Copolyetheramide gewählt ist.

22. Schlaucheinheit nach Anspruch 21, wobei mindestens eine Membranlage aus gerecktem Polytetrafluorethylen (ePTFE) ist.

23. Schlaucheinheit (10) nach Anspruch 3, wobei das mindestens eine Fluid (20) ein Gas, ein Dampf, eine Flüssigkeit ist.

24. Schlaucheinheit (10) nach Anspruch 1, wobei die Schläuche (16) eine innere Oberfläche (30) und eine äußere Oberfläche (40) aufweisen und eine Oberfläche mit einer gasselektiven Beschichtung (26) versehen ist.

25. Schlauchmodul mit einer Schlaucheinheit (10) nach mindestens einem der Ansprüche 1-24 in einem Schlauchmodul (60) für den Stoffaustausch zwischen mindestens einem ersten Fluid (20) welches durch die Schläuche (16) und die Verbindungselemente (18) strömt und mindestens einem zweiten Fluid (22) welches um die Schläuche (16) strömt.

26. Verwendung der Schlaucheinheit (10) nach mindestens einem der Ansprüche 1-24 in einem Schlauchmodul (60) für den Wärmeaustausch zwischen mindestens einem ersten Fluid (20) welches durch die Schläuche (16) und die Verbindungselemente (18) strömt und mindestens einem zweiten Fluid (22) welches um die Schläuche (16) strömt.

## Claims

1. A tube unit (10) with a first tube unit end (11) and a second tube unit end (12) and with several tubes (16) arranged next to each other, made from a fluid-permeable material, the tubes (16) each have a longitudinal axis (5) extending from a tube inlet (17) to a tube outlet (19) and a tube cross-section (13),
the tube unit (10) having connection elements (18) that are arranged at least between two adjacently arranged tubes (16) and that are connected to the tubes (16) at an angle to the longitudinal axis (5) of the tubes (16) and that have a connection element cross-section (22), traversable by at least one fluid (20),
**characterised in that** the tube cross-section (13) has repeating tube cross-section constrictions and that the inside diameter of the connection elements (18) is less than the inside diameter of the tubes (16).

2. A tube unit (10) according to Claim 1, wherein the connection elements (18) are arranged between tubes (16) at an angle of between 20° and 160°, with respect to the longitudinal axis (5).

3. A tube unit (10) according to Claim 1, wherein the tubes (16) are used to accommodate at least one fluid (20) that flows through the tube (16) from the first tube unit end (11) to the second tube unit end (12).

4. A tube unit (10) according to Claim 1, wherein the tubes (16) assume a spherical shape between two tube cross-section constrictions (50).

5. A tube unit (10) according to Claim 1, wherein the tubes (16) assume a lens-like shape between two tube cross-section constrictions (50).

6. A tube unit (10) according to Claim 1, wherein the tubes (16) periodically have repeating tube cross-section constrictions (50).

7. A tube unit (10) according to Claim 1, wherein the tube cross-section constrictions (50) constitute narrowings of the tubes (16).

8. A tube unit (10) according to Claim 1, wherein the tube cross-section constrictions (50) constitute obstacles arranged in the tube cross-section (13) in the tubes (16).

9. A tube unit (10) according to Claim 1, wherein the connection elements (18) are arranged in the area of the tube cross-section constrictions (50).

10. A tube unit (10) according to Claim 1, wherein the connection elements (18) have the same material structure as the tubes (16).

11. A tube unit (10) according to Claim 1, wherein the connection elements (18) have repeating spacings with respect to one another.

12. A tube unit (10) according to Claim 11, wherein the connection elements (18) have periodically repeating spacings with respect to one another.

13. A tube unit (10) according to Claim 12, wherein the connection elements (18) have a spacing of at least 1 mm with respect to one another.

14. A tube unit (10) according to Claim 1, wherein the tubes (16) have an inside tube diameter of 0.1-5 mm.

15. A tube unit (10) according to Claim 14, wherein the connection elements (18) have an inside diameter of at least 10% of the inside tube diameter.

16. A tube unit (10) according to Claim 1, wherein the tubes (16) are hollow fibers.

17. A tube unit (10) according to Claim 1, wherein the connection elements (18) are hollow fibers.

18. A tube unit (10) according to Claim 1, wherein the permeable material is gas-permeable.

19. A tube unit (10) according to Claim 1, wherein the permeable material is liquid-tight.

20. A tube unit (10) according to Claim 1, wherein the tubes (16) have a number of laminated membrane layers.

21. A tube unit (16) according to Claim 20, wherein at least one membrane layer is chosen from the group of materials consisting of polyesters, polyamides, polyolefins containing polyethylene and polypropylene, polyvinylchloride, polyketones, polysulfones, polycarbonates, fluoropolymers such as polytetrafluoroethylene (PTFE) and polyvinylidene difluoride, polyacrylates, polyurethanes, copolyether esters, and copolyether amides.

22. A tube unit according to Claim 21, wherein at least one membrane layer is made from expanded polytetrafluoroethylene (ePTFE).

23. A tube unit (10) according to Claim 3, wherein the at least one fluid (20) is a gas, vapor, or liquid.

24. A tube unit (10) according to Claim 1, wherein the tubes (16) have an inside surface (30) and an outside surface (40), and one surface is provided with a gas-selective coating (26).

25. A tube module with a tube unit (10) according to at least one of Claims 1 through 24 in a tube module (60) for mass transfer between at least one first fluid (20) that flows through the tubes (16) and the connection elements (18), and at least one second fluid (22) that flows around the tubes (16).

26. Use of a tube unit (10) according to at least one of Claims 1 through 24 in a tube module (60) for heat exchange between at least one first fluid (20) that flows through the tubes (16) and the connection elements (18), and at least one second fluid (22) which flows around the tubes (16).

## Revendications

1. Une unité tubulaire (10) comportant une première extrémité de l'unité tubulaire (11) et une seconde extrémité (12) et avec plusieurs tubes (16) disposés les uns à côté des autres, composés d'un matériau perméable aux liquides et don chacun des tubes (16) comporte un axe longitudinal (5) se prolongeant à partir de l'orifice d'entrée d'un tube (17) jusqu'à l'orifice de sortie d'un tube (19) et une section transversale d'un tube (13), l'unité tubulaire (10) ayant des éléments de connexion (18) qui sont disposés au moins entredeux tubes disposés de façon adjacente (16) qui sont reliés au tube (16) formant un angle avec l'axe longitudinal (5) du tube (16) et qui ont une section transversale avec l'élément de connexion (22), traversable pour au moins un fluide (20), **caractérisé par le fait que** la section transversale de la tube a des étranglements répétés sur la section transversale et que le diamètre interne des éléments de connexion (18) est inférieur au diamètre interne du tube (16).

2. Une unité tubulaire (10) selon la Théorie 1, selon laquelle les éléments de connexion (18) sont disposés de façon à former un angle entre 20° et 160°, par rapport à l'axe longitudinal (5) entre les tubes (16).

3. Une unité tubulaire (10) selon la Théorie 1, par laquelle les tubes (16) sont utilisés pour accueillir au moins un fluide (20) s'écoulant dans le tube (16) depuis la première extrémité de l'unité tubulaire (11) jusqu'à la seconde extrémité de l'unité tubulaire (12).

4. Selon la Théorie 1, une unité tubulaire (10) par laquelle les tubes (16) adoptent une forme sphérique entre deux étranglements de section transversale du tube (50).

5. Selon la Théorie 1, une unité tubulaire (10) par laquelle les tubes (16) adoptent une forme de type lentille entre deux étranglements de section transversale du tube (50).

6. Selon la Théorie 1, une unité tubulaire (10) par laquelle les tubes (16) ont périodiquement des étranglements à répétition sur la section transversale du tube (50).

7. Selon la Théorie 1, une unité tubulaire (10) par laquelle les étranglements sur la section transversale du tube (50) représentent les rétrécissements des tubes (16).

8. Selon la Théorie 1, une unité tubulaire (10) par laquelle les étranglements sur la section transversale du tube (50) représentent des obstacles disposés dans la section transversale du tube (13) à l'intérieur des tubes (16).

9. Selon la Théorie 1, une unité tubulaire (10) par laquelle les éléments de connexion (18) sont disposés dans la zone des étranglements de la section transversale du tube (50).

10. Selon la Théorie 1, une unité tubulaire (10) par laquelle les éléments de connexion (18) possèdent la même structure de matériau que les tubes (16).

11. Selon la Théorie 1, une unité tubulaire (10) par laquelle les éléments de connexion (18) ont des espacements à répétition les uns par rapport aux autres.

12. Selon la Théorie 11, une unité tubulaire (10) par laquelle les éléments de connexion (18) ont périodiquement des espacements à répétition les uns par rapport aux autres.

13. Selon la Théorie 12, une unité tubulaire (10) par laquelle les éléments de connexion (18) ont un espacement d'au moins 1 mm les uns par rapport aux autres.

14. Selon la Théorie 1, une unité tubulaire (10) par laquelle les tubes (16) ont un diamètre interne de 0.1 à 5 mm.

15. Selon la Théorie 14, une unité tubulaire (10) par laquelle les éléments de connexion (18) ont un diamètre interne d'au moins 10 % par rapport au diamètre interne du tube.

16. Selon la Théorie 1, une unité tubulaire (10) par laquelle les tubes (16) ont des fibres creuses.

17. Selon la Théorie 1, une unité tubulaire (10) par laquelle les éléments de connexion (18) ont des fibres creuses.

18. Selon la Théorie 1, une unité tubulaire (10) par laquelle le matériau perméable est perméable au gaz.

19. Selon la Théorie 1, une unité tubulaire (10) par laquelle le matériau perméable est étanche.

20. Selon la Théorie 1, une unité tubulaire (10) par laquelle les tubes (16) ont un certain nombre de couches de membranes stratifiées.

21. Selon la Théorie 20, une unité tubulaire (16) par laquelle au moins une couche de membrane est choisie à partir du groupe de matériaux se composant de polyesters, polyamides, polyoléfines contenant du polyéthylène et du polypropylène, du polychlorure de vinyle, des polycétones, des polysulfones, des polycarbonates, des fluoropolymères tels que du polytétrafluoroéthylène (PTFE) et du difluorure de polyvinylidène, des polyacrylates, des polyuréthanes, des esters de copolyéther et des amides de copolyéther.

22. Selon la Théorie 21, une unité tubulaire par laquelle au moins une couche de membrane est effectuée à partir de polytétrafluoroéthylène expansé (ePTFE).

23. Selon la Théorie 3, une unité tubulaire (10) par laquelle au moins un fluide (20) est un gaz, de la vapeur ou un liquide.

24. Selon la Théorie 1, une unité tubulaire (10) par laquelle les tubes (16) ont une surface interne (30) et une surface externe (40), et possèdent une surface qui est fournie avec un revêtement sélectif des gaz (26).

25. Un module tubulaire avec une unité tubulaire (10) selon au moins l'une des Théories de 1 à 24 dans un module tubulaire (60) pour un transfert de masse entre au moins un premier fluide (20) qui s'écoule dans les tubes (16) et les éléments de connexion (18) et au moins un second fluide (22) qui s'écoule autour des tubes (16).

26. L'utilisation d'une unité tubulaire (10) selon au moins l'une des Théories de 1 à 24 dans un module tubulaire (60) pour un échange de chaleur entre au moins un premier fluide (20) qui s'écoule dans les tubes (16) et les éléments de connexion (18) et au moins un second fluide (22) qui s'écoule autour des tubes (16).
